# EUROPEAN PATENT APPLICATION

(11) **EP 2 071 478 A2**
(43) Date of publication of application: **17.06.2009**
(21) Application number: 08169659.3
(22) Date of filing: 21.11.2008
(51) Int. Cl.: G06F 17/30

(54) **Search device, navigation device, search method and computer program product**

(30) Priority: 07.12.2007 JP 2007317135
(71) Applicant: Aisin AW Co., Ltd., Fujii-cho Anjo-shi, Aichi 444-1192 (JP)
(72) Inventor: Kawauchi, Hiroshi, Okazaki-shi, Aichi 444-8564 (JP); Sakai, Takamitsu, Okazaki-shi, Aichi 444-8564 (JP)
(74) Representative: TBK-Patent

(57) **Abstract**

In a navigation device, three categories, Name, Address, and Genre, can be designated one at a time by using category tabs. Keywords can be input after the category is designated. Logical multiplication is set as a search condition when the keywords belong to different categories. When the keywords belong to the same category, the search condition is set to logical multiplication if the keywords are in a hierarchical relationship and is set to logical addition if the keywords are not in a hierarchical relationship. Where the search condition is logical multiplication, the maximum number of search results is the number of search objects for the keyword that has the fewest search objects, so that number is displayed. Where the search condition is logical addition, the maximum number of search results is the sum of the numbers of the search obj ects for each of the keywords, so that number is displayed.

## Description

### 1. Field of the Invention

The present invention relates to a search device, a navigation device, a search method and a respective computer program product, for supporting input of a search term, for example.

### 2. Description of the Related Art

In recent years, the guidance of vehicles by navigation devices has become increasingly common.
A navigation device has a function that searches for a route from a departure point to a destination, a function that detects the vehicle's position using the Global Positioning System (GPS) satellites and a sensor such as a gyroscope or the like, a function that displays the vehicle's current position and the route to the destination on a map, and the like.
Generally, as proposed in Japanese Patent Application Publication No. JP-A-7-306862, a plurality of destination data items (phonetic representations of names, genres, addresses, and the like) are stored in the navigation device, and when a search is performed for a name of a location, a name of a facility, or the like at a destination, candidate locations are selected by inputting a phonetic representation of a name, an address, a telephone number, or the like from a touch panel.
Then, when the input of the phonetic representation or the search according to the genre is completed, the selected candidate locations are displayed in list form on a display screen, and the desired destination is designated from among the locations in the list.

A search condition can be set in accordance with a logical formula in which a plurality of search terms are connected by a logical operator. The navigation device narrows down the objects of the search in accordance with the search condition.
Thus an information search method, explained below, is known that serves as a technology that uses the logical operator to narrow down the objects of the search.

The technology creates a search condition formula by which a user designates a region of a Venn diagram that indicates a combination of keywords that are displayed on a screen.

### SUMMARY OF THE INVENTION

However, in the known navigation device, the number of search objects is not known until the search is completed.
In particular, as the logical formula for the plurality of the search terms becomes more complex, the time that is required for the search becomes longer, so the time during which the number of search objects is not known also becomes longer.

Accordingly, it is an object of the present invention to display an approximate number of the search objects.

According to the first aspect of the present invention, the search condition can be set for the search terms, and the number of the search objects that correspond to the search condition can be displayed.
According to the second aspect of the present invention, the approximate number of the search objects can be calculated for the search terms that were input.
According to the third aspect of the present invention, an upper limit on the number of the search objects can be provided by using as the approximate number of the search objects the maximum number of the search objects that can be found.
According to the fourth aspect of the present invention, the maximum number of the search objects that can be found can be used as the approximate number of the search objects in a case where the search condition is set to logical multiplication.

According to the fifth aspect of the present invention, the maximum number of the search objects that can be found can be used as the approximate number of the search objects in a case where the search condition is set to logical addition.
According to the sixth aspect of the present invention, the search device according to any one of the first through the fifth aspects can be installed in the navigation device and can be used to provide guidance to the destination.
According to the seventh aspect of the present invention, a search method according to the first aspect is provided which may be implemented in a computer.

### BRIEF DESCRIPTION OF THE DRAWINGS

FIG. 1 is a system configuration diagram of a navigation device;
FIG. 2 is a figure that shows a search term input screen;
FIG. 3 is a figure that shows a search results screen;
FIG. 4 is a figure that shows a logical configuration of a destination data file;
FIG. 5 is a figure that shows a logical configuration of a keyword data file;
FIG. 6 is a figure for explaining a hierarchical relationship for keywords in a Genre category;
FIG. 7 is a figure for explaining a hierarchical relationship for the keywords in an Address category;
FIG. 8 is a figure for explaining a case where a plurality of locations exist that have the same name;
FIG. 9 is a figure that shows a table of logical operators that are set for combinations of the keywords;
FIG. 10 is a figure for explaining a display process for an approximate number;
FIG. 11 is a figure that shows an example of successive changes of the approximate number;
FIG. 12 is a flowchart for explaining a procedure that displays the approximate number;
FIG. 13 is a flowchart for explaining a procedure that performs a count within a category; and
FIG. 14 is a figure for explaining an automatic setting of the category for the keyword.

### DETAILED DESCRIPTION OF THE PREFERRED EMBODIMENTS

### (1) Overview of the embodiment

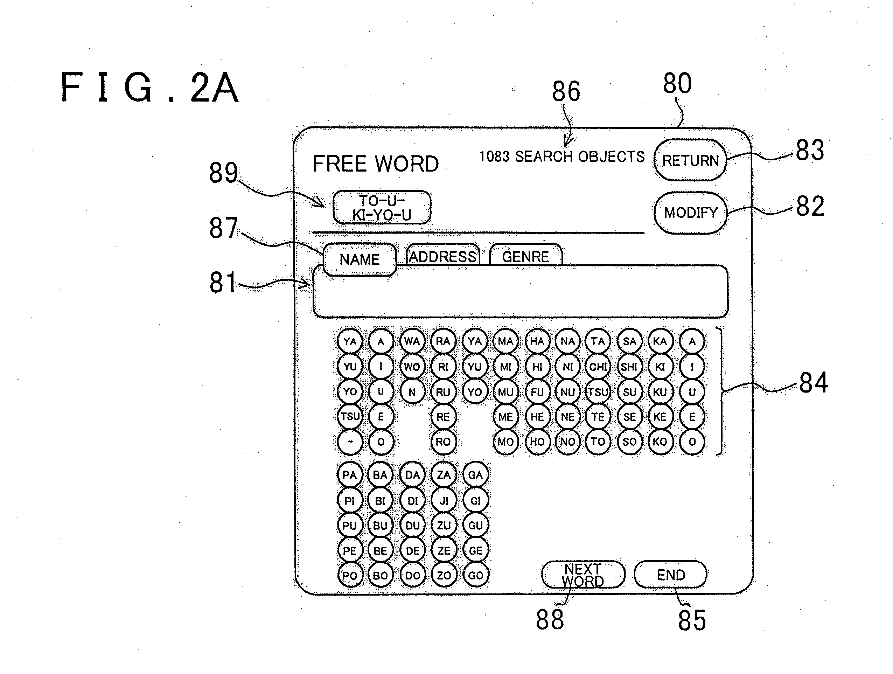

In a navigation device 1, three categories, Name, Address, and Genre, can be designated one at a time by using category tabs 87 (FIG. 2A). Keywords can be input after the category is designated.
In the navigation device 1, logical multiplication is set as a search condition when the categories of the keywords are different. When the keywords belong to the same category, logical multiplication is set as the search condition in a case where the keywords are in a hierarchical relationship, and logical addition is set as the search condition in a case where the keywords are not in a hierarchical relationship.
Thus, once the keywords are input, the navigation device 1 can select an appropriate logical operator based on the categories of the keywords and set the search condition automatically.

While performing a search, the navigation device 1 displays an approximate number of search objects in a number of search objects area 86.
In a case where the search condition is set to logical multiplication, the maximum number of search results is the number of the search objects for the keyword that has the fewest search objects, so that number is displayed. In a case where the search condition is set to logical addition, the maximum number of the search results is the sum of the numbers of the search objects for each of the keywords, so that number is displayed.
Displaying the approximate number of the search results makes it possible for a user to judge whether to add an additional keyword or to delete one of the keywords.

### (2) Details of the embodiment

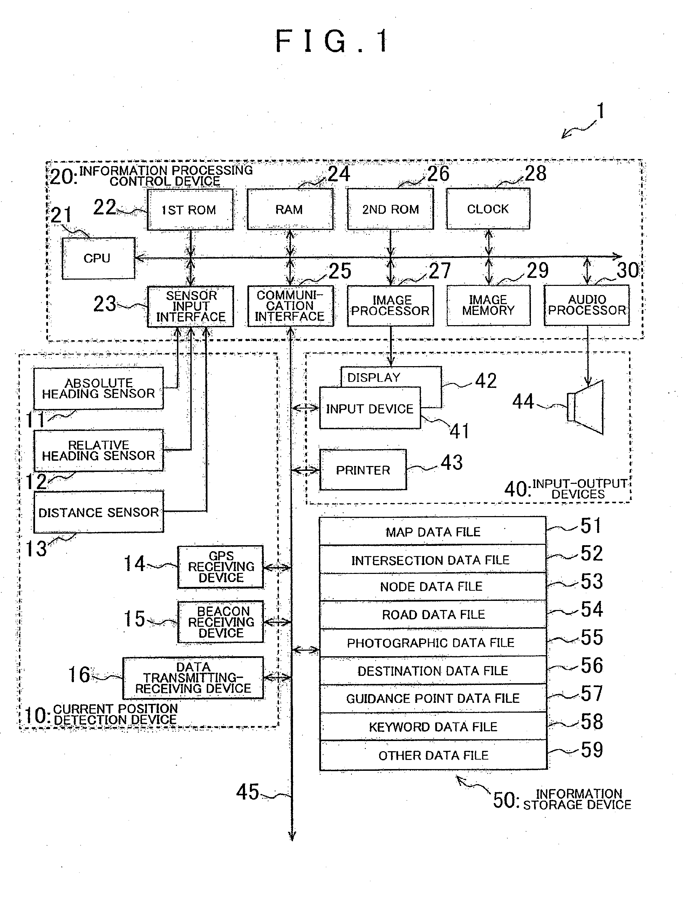

FIG. 1 is a system configuration diagram of the navigation device 1 in which the present embodiment is used.
The navigation device 1 is installed in a vehicle and, as shown in FIG. 1, includes a current position detection device 10, an information processing control device 20, input-output devices 40, and an information storage device 50.
A configuration of the current position detection device 10 will be explained first. An absolute heading sensor 11 is a geomagnetic sensor that detects the direction in which the vehicle is facing, by using a magnet to detect the direction north, for example. The absolute heading sensor 11 may be any unit that detects an absolute heading.

A relative heading sensor 12 is a sensor that detects, for example, whether or not the vehicle has turned at an intersection. It may be an optical rotation sensor that is attached to a rotating portion of the steering wheel, a rotating type of resistance volume, or an angle sensor that is attached to a wheel portion of the vehicle.
A gyroscopic sensor that utilizes angular velocity to detect a change in an angle may also be used. In other words, the relative heading sensor 12 may be any unit that can detect an angle that changes in relation to a reference angle (the absolute heading).
A distance sensor 13 may be, for example, a unit that detects and measures a rotation of a wheel or a unit that detects an acceleration and derives its second integral. In other words, the distance sensor 13 may be any unit that can measure a distance that the vehicle moves.

A GPS receiving device 14 is a device that receives a signal from a man-made satellite. It can acquire various types of information, such as a signal transmission time, information on the position of the receiving device 14, a movement velocity of the receiving device 14, a direction of movement of the receiving device 14, and the like.
A beacon receiving device 15 is a device that receives a signal that is transmitted from a transmission device that is installed at a specific location. Specifically, the beacon receiving device 15 can obtain information that pertains to the vehicle's operation, such as VICS information (information on traffic congestion, information on the vehicle's current position, parking information, and the like).

A data transmitting-receiving device 16 is a device that utilizes a telephone circuit or radio waves to perform communication and exchange information with other devices outside the vehicle.
For example, the data transmitting-receiving device 16 may be used in a variety of ways, such as for a car telephone, ATIS, VICS, GPS route correction, inter-vehicle communication, and the like, and is capable of inputting and outputting information that relates to the operation of the vehicle.
The information processing control device 20 performs calculations and control based on information that is input from the current position detection device 10 and the input-output devices 40, as well as on information that is stored in the information storage device 50. The information processing control device 20 is also a unit that performs control such that calculation results are output to an output unit such as a display 42, a printer 43, a speaker 44, or the like.

The configuration of the information processing control device 20 is described below.
A central processing unit (CPU) 21 performs overall calculations and control for the entire navigation device 1.
A first ROM 22 stores programs that are related to navigation, specifically navigation programs that are related to current position detection, to route searching, to displayed guidance, and the like.
A sensor input interface 23 is a unit that receives an input from the current position detection device 10.

A RAM 24 stores information that the user inputs, such as an input from an input device 41 that is described later, as well as destination information, information on a point that the vehicle passes, and the like. The RAM 24 is also a storage unit for storing the results of calculations that the CPU 21 makes based on the information that is input by the user, route search results, and map information that is read in from the information storage device 50.
A communication interface 25 is a unit that inputs and outputs information from the current position detection device 10, particularly information that is acquired from outside the vehicle.

A second ROM 26 stores programs that are related to navigation, a navigation program that is related to voice guidance, and in particular, a search program that automatically sets the search condition (that is, a search condition formula) that is described later.
An image processor 27 is a processing unit that takes vector information that is processed by the CPU 21 and processes it into image information.
A clock 28 keeps time.
An image memory 29 is a unit that stores the image information that the image processor 27 processes.
An audio processor 30 processes audio information that is read in from the information storage device 50 and outputs it to the speaker 44.

The input-output devices 40 include the input device 41, the display 42, the printer 43, and the speaker 44. The user uses the input device 41 to input data such as a destination, a point that the vehicle passes, the search condition, and the like. The display 42 displays an image. The printer 43 prints information. The speaker 44 outputs the audio information. The input device 41 may be a touch panel that is provided on the face of the display 42, a touch switch, a joystick, a key switch, or the like.
A map of the area around the current position, various types of operation screens, and a driving route to the destination are displayed on the display 42.

The information storage device 50 is connected to the information processing control device 20 through a transmission route 45.
The information storage device 50 stores a map data file 51, an intersection data file 52, a node data file 53, a road data file 54, a photographic data file 55, a destination data file 56, a guidance point data file 57, a keyword data file 58, and an other data file 59.
The information storage device 50 is generally configured from an optical storage medium such as a DVD-ROM or a CD-ROM, or from a magnetic storage medium such as a hard disk or the like, but it may also be configured from any one of various types of information storage media, such as a magneto optical disk, a semiconductor memory, or the like.

The map data file 51 stores map data such as a national road map, road maps of various regions, residential maps, and the like. The road maps include various types of roads, such as main arterial roads, expressways, secondary roads, and the like, as well as terrestrial landmarks (facilities and the like). The residential maps include graphics that show the shapes of terrestrial structures and the like, as well as street maps that indicate street names and the like. The secondary roads are comparatively narrow roads with rights of way that are narrower than the prescribed values for national routes and prefectural routes. They include roads for which traffic restriction information is not added, such as "one-way" and the like.

The intersection data file 52 stores data that is related to intersections, such as geographical coordinates for the locations of intersections, intersection names, and the like. The node data file 53 stores geographical coordinate data and the like for each node that is used for route searching on the map. The road data file 54 stores data that is related to roads, such as the locations of roads, the types of roads, the number of lanes, the connection relationships between individual roads, and the like. The photographic data file 55 stores image data of photographs taken of locations that require visual display, such as various types of facilities, tourist areas, major intersections, and the like. The guidance point data file 57 stores guidance data on geographical points where guidance is required, such as the content of a guidance display sign that is installed on a road, guidance for a branching point, and the like. The other data file 59 stores other data.

A more detailed explanation will be provided later, but the destination data file 56 stores names and search keys for destinations that serve as the search objects, as well as the keywords and the like. The search keys and the keywords are both associated with the search objects and are used as search terms when the navigation device 1 performs a search.
The keyword data file 58 stores the categories, as well as the keywords for which hierarchical relationships are established within the same category.
The navigation device 1 can find the search objects by searching the destination data file 56 for the keywords that are used in the search condition formula, which is formulated from the keywords that are selected from the keyword data file 58.

FIG. 2A is a figure that shows an example of a search term input screen 80 that is displayed on the display 42.
A touch panel that makes up the input device 41 (FIG. 1) is formed on the face of the display 42. The touch panel is configured such that by touching a button or the like that is displayed on the display 42, the user can input to the navigation device 1 information that corresponds to the touched button.
A search term input space 81 is a space for inputting the search terms by selecting keys on a character keyboard 84.
For example, if the user inputs "to", the keywords that start with "to", such as "to-a" and the like, are displayed. If the user inputs "u" next, the keywords that start with "to-u", such as "to-u-ki-yo-u" and the like, are displayed.
In this manner, as the user inputs each character, the keywords that start with the character string that has been input up to that point are displayed.

The category tabs 87 are tab buttons for designating the categories for the keywords.
Thus the navigation device 1 is provided with a category acquisition unit that acquires the category for the search term.
In the present embodiment, Name, Address, and Genre are the three categories that can be set for the keywords, and they can be designated by the category tabs 87.
For example, in some cases, "to-u-ki-yo-u" is used for a name, such as "Tokyo Denbarland" or the like, and in other cases, "to-u-ki-yo-u" is used for an address, such as "to-u-ki-yo-u-to si-n-ju-ku-ku WW" or the like, so the two categories Name and Address are assigned to "to-u-ki-yo-u".

A search term setting space 89 is a space for confirming the search term and setting the search condition. The search term setting space 89 functions as an input unit for inputting the search term.
The search term setting space 89 displays, in an unconfirmed state, the characters that the user selects on the character keyboard 84. Further, if the user selects the keyword in the search term input space 81, the selected keyword is displayed in the search term setting space 89 in an unconfirmed state.
If the user then selects a Next Word button 88, the character string in the search term setting space 89 is confirmed and is displayed in a confirmed state. In FIG. 2A, the character string is displayed with a rectangular frame around it to indicate the confirmed state.

For example, if the user inputs "to-u", "to-u" is displayed in the unconfirmed state in the search term setting space 89. If the user selects "to-u-ki-yo-u" that is displayed in the search term input space 81, the character string "to-u-ki-yo-u" is displayed in the search term setting space 89 in the unconfirmed state.
If the user then selects a Next Word button 88, the character string "to-u-ki-yo-u" is confirmed and is displayed in the confirmed state in the search term setting space 89.

If a plurality of the search terms are input in the search term setting space 89, the navigation device 1 connects the search terms by automatically selecting a logical operator by a method that will be explained later. The navigation device 1 thus sets the search condition.
Whenever the search term in the search term setting space 89 is confirmed, the logical operator is set and the search condition is newly formulated. Each time the search condition is formulated, the navigation device 1 performs the search in accordance with the search condition.

For example, in a case where the search term "to-u-ki-yo-u" is input and confirmed (with the category set to Name), the navigation device 1 starts searching for "to-u-ki-yo-u" as a name. If the user further inputs and confirms "ra-n-do" (with the category set to Name), the navigation device 1 sets the search condition formula to "to-u-ki-yo-u" (Name) x "ra-n-do" (Name), then starts the search anew in accordance with the search condition formula.
Note that in the present embodiment, the logical operator for logical multiplication is expressed as "x", and the logical operator for logical addition is expressed as "+".

Thus the navigation device 1 is provided with a determination unit that, in a case where a first search term and a second search term are input by the input unit, acquires the categories of the first search term and the second search terms and determines the logical operator for the first search term and the second search term according to the acquired categories in combination.
The navigation device 1 is also provided with a search condition formula setting unit that uses the logical operator for the plurality of the search terms that are input to set the search condition for the search terms.

The number of search objects area 86 is an area that displays the approximate number of the search objects that fit the search condition that is set in the search term setting space 89.
In a case where the number of the search objects has been confirmed, a confirmed number is displayed in the number of search objects area 86. In a case where the approximate number is used, a range of the search objects is displayed in the form of "XX or fewer search objects", "XX or more search objects", "no fewer than XX search objects, no more than XX search objects", or the like.
In the present embodiment, a maximum number of the search objects for which the search can be performed is displayed as the approximate number by a method that will be explained later.

A certain amount of time is required to find the search objects that correspond to the set search condition and to display the results, so displaying the approximate number of the search objects during that time makes it possible for the user to determine whether to add a new keyword and whether to delete one of the existing keywords.
If the approximate number is displayed during the time until the search results are output, the approximate number may be displayed continuously and it may be displayed temporarily.
Thus the navigation device 1 is provided with an approximate number calculation unit that calculates the approximate number of the search objects that correspond to the set search condition. The navigation device is also provided with an approximate number display unit that displays the calculated approximate number during the time until the search results are output.

In the example in FIG. 2A, "1083 search objects" is shown. This is displayed as the confirmed number, because the number of the search objects that correspond to the set search condition for the keyword "to-u-ki-yo-u" could be specified in a short time.
This makes it possible for the user to know approximately how many of the search objects will be found in accordance with the search condition before the search results are output. The user can then determine whether to add another search term and whether to loosen the search condition.

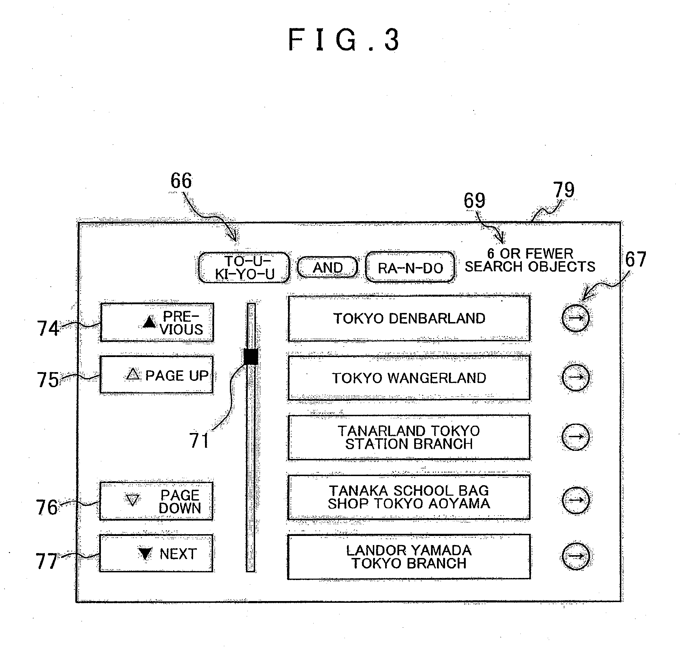

A Return button 83 is a button for returning to a previous screen. A Modify button 82 is a button for modifying the content of the search term setting space 89.
The Next Word button 88, as described above, is a button for confirming the keyword that is input in the search term setting space 89.
An End button 85 is a button for ending input on the search term input screen 80 and shifting to a search results screen 79 (FIG. 3), which is described later.

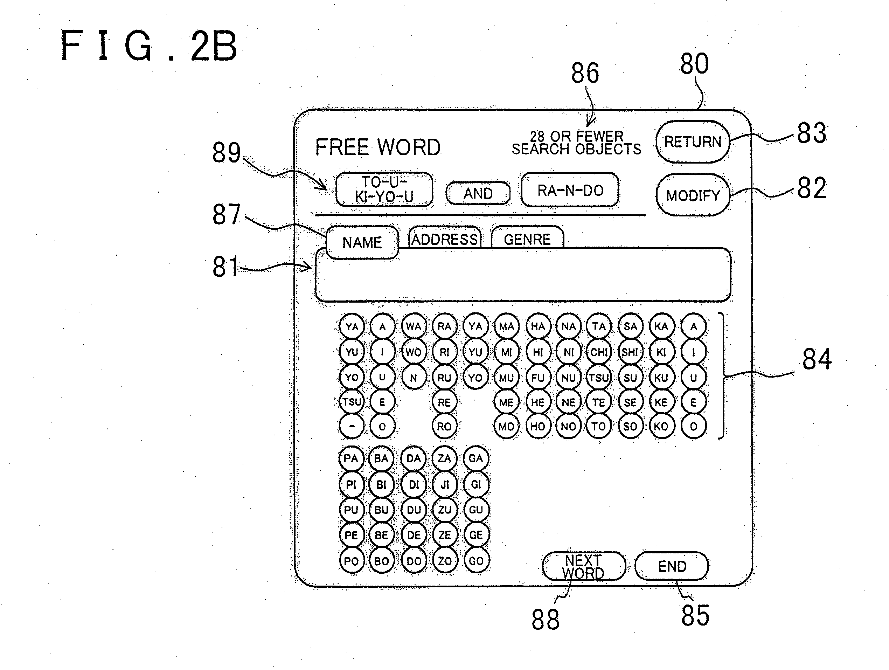

FIG. 2B shows a case where the keyword "ra-n-do" (with the category set to Name) has been added in the search term setting space 89.
As shown in FIG. 2B, the previously input keyword "to-u-ki-yo-u" (Name) and the newly input keyword "ra-n-do" (Name) are connected by the logical multiplication operator (expressed as "AND" in FIG. 2B), and the search condition is automatically set to "to-u-ki-yo-u" × "ra-n-do".
Furthermore, in the number of search objects area 86, a maximum number (28) of the search objects that correspond to the search condition "to-u-ki-yo-u" × "ra-n-do" is displayed as the approximate number, along with the phrase "or fewer".

FIG. 3 is a figure that shows an example of the search results screen 79, and it shows the search results for the search condition "to-u-ki-yo-u" × "ra-n-do" that was set on the search term input screen 80.
A search results display area 66 is an area for displaying the search condition along with a list of location names that have been found by the search. In the example in FIG. 3, five location names can be displayed at a time, and the five highest ranking location names, "Tokyo Denbarland", "Tokyo Wangerland", and the like, are displayed in order by rank.
The navigation device 1 is thus provided with an output unit that outputs the search objects that correspond to the search condition, that is, to the search terms for which a logical operation was performed using the logical operator that was determined by the user's selections.

At this point, if the user selects "Tokyo Denbarland", the navigation device 1 searches in the information storage device 50 for information, such as coordinates and the like, that pertains to "Tokyo Denbarland". The navigation device 1 then sets the destination and uses the current position detection device 10 and the like to guide the vehicle to the destination "Tokyo Denbarland".
The search results screen 79 is provided with a number of search objects area 69 that displays the confirmed number of the search objects that were found.
Thus the navigation device 1 is provided with a guidance unit that guides the vehicle to the destination that was found by the procedure that is described above.

A detail display button 67 is displayed for each of the location names. If the user touches the detail display button 67 for the desired location name, the navigation device 1 searches for location information that corresponds to the location name and displays the information on the display 42.
The Previous button 74 and the Next button 77 are buttons for respectively scrolling up and scrolling down within the search results display area 66, one location name at a time.

The Page Up button 75 and the Page Down button 76 are buttons for respectively scrolling up and scrolling down among the location names in the search results display area 66, one page at a time.
The scroll bar 71 indicates the position of the currently displayed search results among all of the search results. Scrolling up and scrolling down can be done by touching and dragging the scroll bar 71.

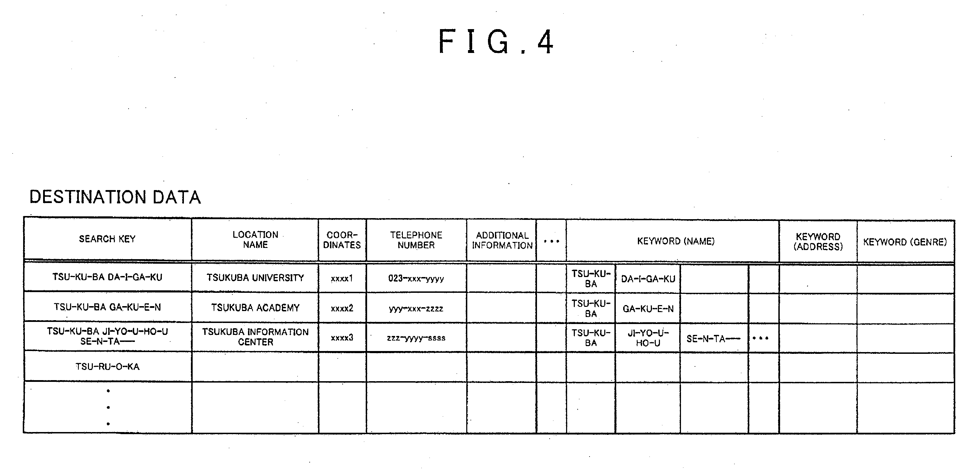

FIG. 4 is a figure that shows an example of a logical configuration of the destination data file 56.
A Location Name item is a character string that indicates a search object. It is used for displaying the search results on the search results screen 79.
A Search Key item is the Location Name expressed in phonetic form.
In a case where the user inputs the search term by character input, without inputting the keyword, the Search Key is used to search for the corresponding Location Name.

Keyword items are the keywords that have been set for the Location Name. The keywords are set for the three categories of Name, Address, and Genre.
The keyword that the user inputs is checked against the keywords in the keyword data file 58 on a category by category basis, and the search objects that match are extracted as the search results.
For example, for the search object "Tsukuba University", the keywords "tsu-ku-ba" and "da-i-ga-ku" are registered in the category Name.
Furthermore, keywords such as "i-ba-ra-ki-ke-n", "tsu-ku-ba-shi", and the like are registered in the category Address, and keywords such as "da-i-ga-ku", "ki-yo-u-i-ku", and the like are registered in the category Genre, although these are not shown in FIG. 4.
A Coordinates item is a coordinates value for the location, such as a latitude and a longitude or the like. A Telephone Number item is a telephone number for a facility that exists at the location. An Additional Information item is additional information.

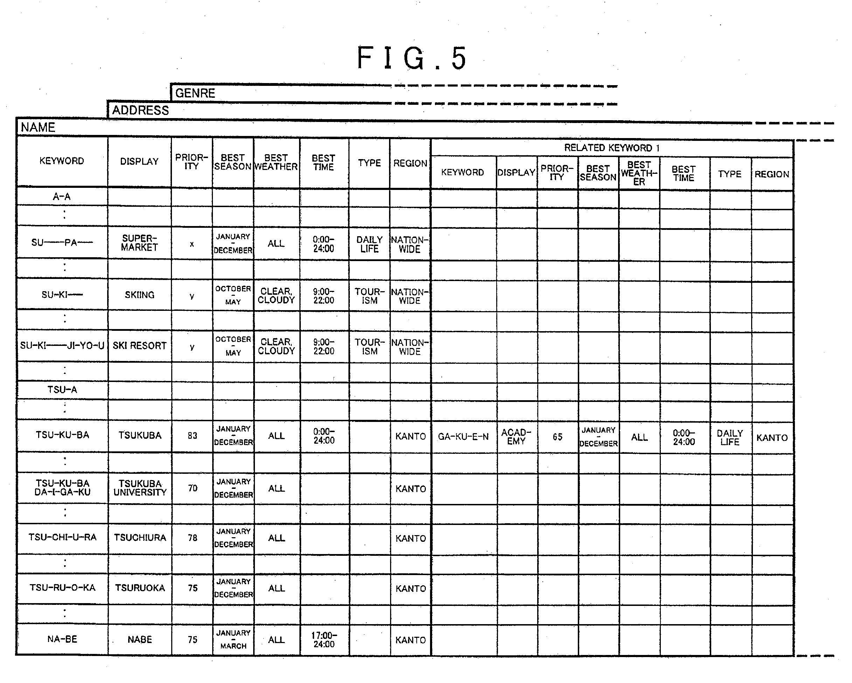

FIG. 5 is a figure that shows an example of a logical configuration of the keyword data file 58.
As shown in FIG. 5, the keyword data file 58 is divided into the three categories of Name, Address, and Genre. The keywords that are used for names are stored in the Name category, the keywords that are used for addresses are stored in the Address category, and the keywords that are used for genres are stored in the Genre category.
When the user uses the category tabs 87 on the search term input screen 80 (FIG. 2A) to select at least one of the Name, Address, and Genre categories, the navigation device 1 searches among the keywords in the at least one selected category, extracts the keywords that correspond to the search term, and displays the extracted keywords in the search term input space 81.

For example, the keyword "su-—-pa-—" is stored as one of the keywords in the Name category for the purpose of searching for proper names of facilities and the like.
"Mi-ru, a-so-bu", "su-ki-—", and the like are examples of the keywords that are stored in the Genre category as the keywords for the genres of the corresponding search objects.
"To-u-ki-yo-u", "o-o-sa-ka", "to-yo-na-ka" and the like are examples of the keywords that are stored in the Address category as the keywords for the addresses of the corresponding search objects.

For the keywords in the Genre category and the keywords in the Address category, hierarchical relationships are established in the keyword data file 58. The hierarchical relationships are explained below.

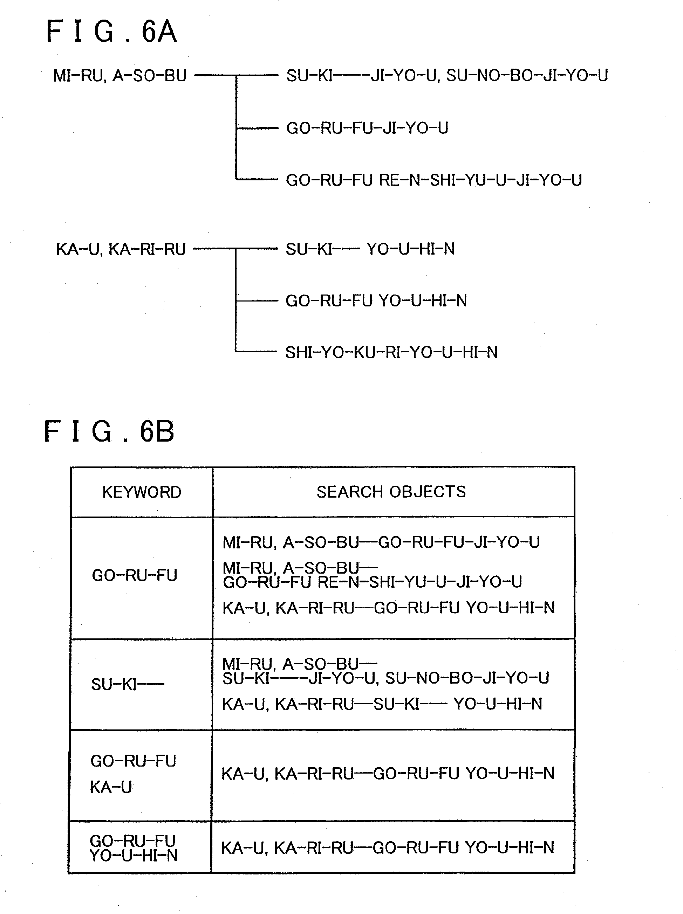

FIG. 6A is a figure that shows an example of hierarchical relationships for the keywords in the Genre category.
For example, for the Genre category keyword "mi-ru, a-so-bu", hierarchical relationships are established with "mi-ru, a-so-bu" in a superior position and "su-ki-―- ji-yo-u, su-no-bo-ji-yo-u", "go-ru-fu-j i-yo-u", and "go-ru-fu re-n-shi-yu-u-ji-yo-u" in a subordinate position.

Note that no hierarchical relationships exist among "su-ki-―-ji-yo-u, su-no-bo-ji-yo-u", "go-ru-fu-ji-yo-u", and "go-ru-fu re-n-shi-yu-u-ji-yo-u", which are ranked equally.
Further, "su-ki-i yo-u-hi-n", "go-ru-fu yo-u-hi-n", and "shi-yo-ku-ri-yo-u-hi-n" are subordinate to the Genre category keyword "ka-u, ka-ri-ru", and "su-ki-― yo-u-hi-n", "go-ru-fu yo-u-hi-n", and "shi-yo-ku-ri-yo-u-hi-n" are ranked equally.
Note also that no hierarchical relationship exists between "mi-ru, a-so-bu" and "ka-u, ka-ri-ru", which are ranked equally.

A more detailed explanation will be provided later, but in a case where the keywords that are input belong to different categories, the navigation device 1 connects the keywords by the logical multiplication operator and sets the search condition to logical multiplication. In a case where the keywords belong to the same category, if there is a hierarchical relationship between the keywords, the navigation device 1 connects the keywords by the logical multiplication operator and sets the search condition to logical multiplication. If the keywords belong to the same category, but there is no hierarchical relationship between the keywords, the navigation device 1 connects the keywords by the logical addition operator and sets the search condition to logical addition.
Therefore, if the keywords that are input are "mi-ru" and "go-ru-fu", for example, both of which are in the Genre category, the navigation device 1 sets the search condition to "mi-ru" × "go-ru-fu", because the keywords are in a hierarchical relationship. If the keywords that are input are "mi-ru" and "ka-u", the navigation device 1 sets the search condition to "mi-ru" + "ka-u", because the keywords are not in a hierarchical relationship.

In accordance with the hierarchical relationships of the keywords shown in FIG. 6A, if the keyword is "go-ru-fu", then as shown in FIG. 6B, the search objects are the facilities and the like that are associated with "mi-ru, a-so-bu" — "go-ru-fu-ji-yo-u", "mi-ru, a-so-bu" — "go-ru-fu re-n-shi-yu-u-ji-yo-u", and "ka-u, ka-ri-ru" — "go-ru-fu yo-u-hi-n" (where "—" indicates the hierarchical relationship).
If the keyword is "su-ki-—", the search objects are the facilities and the like that are associated with "mi-ru, a-so-bu" — "su-ki-―-ji-yo-u, su-no-bo-ji-yo-u" and "ka-u, ka-ri-ru" — "su-ki-― yo-u-hi-n".

Furthermore, if the keywords are "go-ru-fu" and "ka-u", the search condition becomes "go-ru-fu" × "ka-u", because the keywords are in a hierarchical relationship, and the search objects are the facilities and the like that are associated with "ka-u, ka-ri-ru" — "go-ru-fu yo-u-hi-n".
Finally, if the keyword is "go-ru-fu yo-u-hi-n", the search objects are the facilities and the like that are associated with "ka-u, ka-ri-ru" — "go-ru-fu yo-u-hi-n".

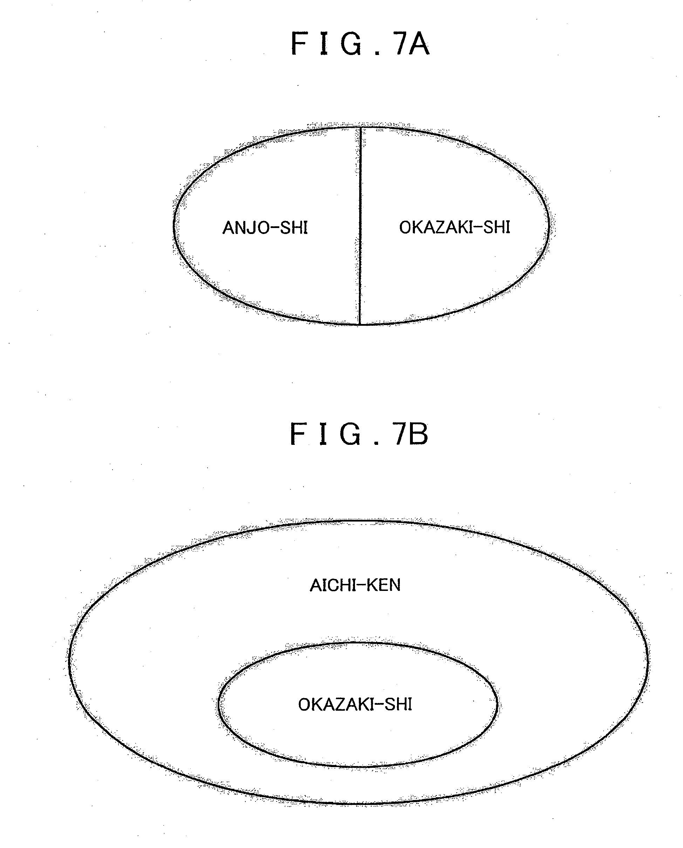

The diagrams in FIG. 7 are figures for explaining the hierarchical relationships that are established for the keywords in the Address category.
In the present embodiment, the hierarchical relationships for the keywords in the Address category are established in accordance with the hierarchical relationship of place names for prefectures, cities, towns, and villages.
That is, in a case where a region that is labeled with one place name is contained within a region that is labeled with another place name, the place name for the contained region is defined as subordinate to the place name for the containing region.

FIG. 7A is a diagrammatic expression of a map. As shown in the diagram, the cities of Okazaki-shi and Anjo-shi are located adjacent to one another in Aichi-ken. No relationship exists by which one of the cities contains the other, so no hierarchical relationship is established between the keywords "o-ka-za-ki-shi" and "a-n-jo-u-shi".
Therefore, in a case where the keywords "o-ka-za-ki-shi" and "a-n-jo-u-shi" are input, the navigation device 1 uses logical addition and sets the search condition to "o-ka-za-ki-shi" + "a-n-jo-u-shi", and the facilities and the like that are located in one of Okazaki-shi and Anjo-shi become the search objects.
Note that the hierarchical relationship is also not established in a case where the locations are not adjacent, but rather geographically separated, such as Osaka Prefecture and Metropolitan Tokyo, for example.

In contrast, in the example in FIG. 7B, Okazaki-shi is contained within Aichi-ken, so the keyword "o-ka-za-ki-shi" is subordinate to the keyword "a-i-chi-ke-n".
Therefore, in a case where "o-ka-za-ki-shi" and "a-i-chi-ke-n" are input as the keywords, the navigation device 1 uses logical multiplication and sets the search condition to "o-ka-za-ki-shi" × "a-i-chi-ke-n", and the facilities and the like that are located in Okazaki-shi, Aichi-ken become the search objects.

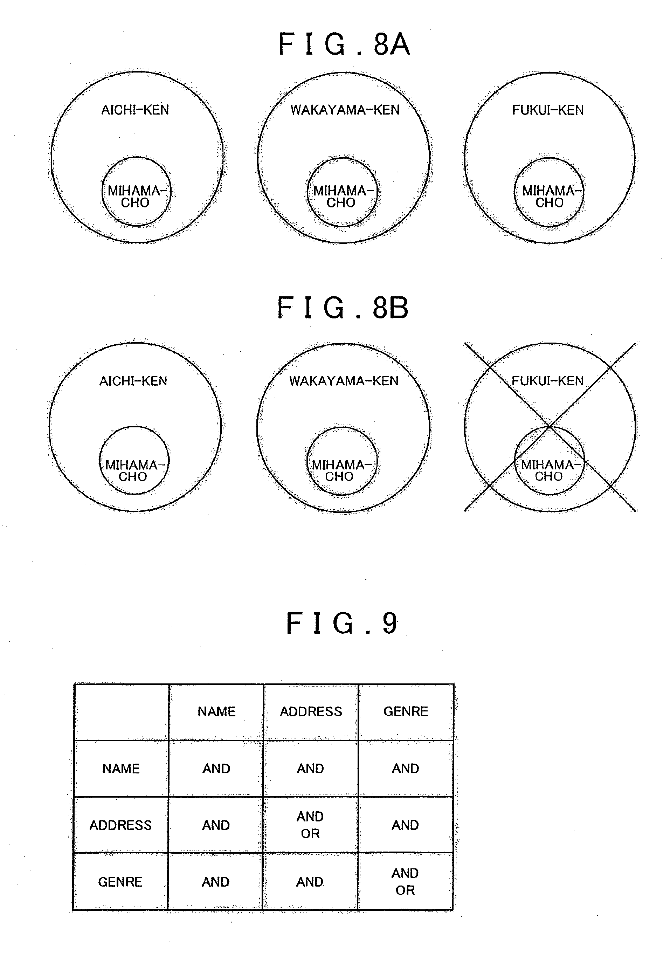

Next, a case where a plurality of locations exist that have the same name will be explained using the diagrams in FIG. 8.
As shown in FIG. 8A, towns called Mihama-cho exist only in Aichi-ken, Wakayama-ken, and Fukui-ken.
In this case, if "mi-ha-ma-chi-yo-u" is input as the keyword, because the three towns called Mihama-cho are respectively subordinate to "a-i-chi-ke-n", "wa-ka-ya-ma-ken", and "fu-ku-i-ke-n" and no hierarchical relationship exists among the three prefectures, the navigation device 1 connects the keywords by a combination of logical multiplication and logical addition and sets the search condition as ("a-i-chi-ke-n" × "mi-ha-ma-chi-you") + ("wa-ka-ya-ma-ke-n" × "mi-ha-ma-chi-yo-u") + ("fu-ku-i-ke-n" × "mi-ha-ma-chi-you").
Thus the facilities and the like that are located in Mihama-cho, Aichi-ken, Mihama-cho, Wakayama-ken, and Mihama-cho, Fukui-ken, become the search objects.

On the other hand, as shown in FIG. 8B, if "mi-ha-ma-chi-yo-u", "a-i-chi-ke-n", and "wa-ka-ya-ma-ke-n" are input as the keywords, because "a-i-chi-ke-n", and "wa-ka-ya-ma-ke-n" are ranked equally and "mi-ha-ma-chi-yo-u" is subordinate to each, the navigation device 1 sets the search condition as ("a-i-chi-ke-n" × "mi-ha-ma-chi-yo-u") + ("wa-ka-ya-ma-ke-n" × "mi-ha-ma-chi-yo-u"). The facilities and the like that are located in Mihama-cho, Aichi-ken, and Mihama-cho, Wakayama-ken, become the search objects, while the facilities and the like that are located in Mihama-cho, Fukui-ken, are excluded from the search objects.

FIG. 9 is a figure that shows a table of logical operators that the navigation device 1 sets for combinations of the keywords.
In the table, logical multiplication is indicated by "AND", and logical addition is indicated by "OR".
As shown in FIG. 9, in a case where two of the keywords are in different categories, such as one in the Name category and one in the Address category, for example, the navigation device 1 sets the search condition to logical multiplication.

The search condition is also set to logical multiplication in a case where the two keywords are both in the Name category.
On the other hand, where the two keywords are both in the Address category and where the two keywords are both in the Genre category, the logical operator is selected according to whether or not the hierarchical relationship exists. In a case where the hierarchical relationship does exist, logical multiplication is selected, and in a case where the hierarchical relationship does not exist, logical addition is selected.

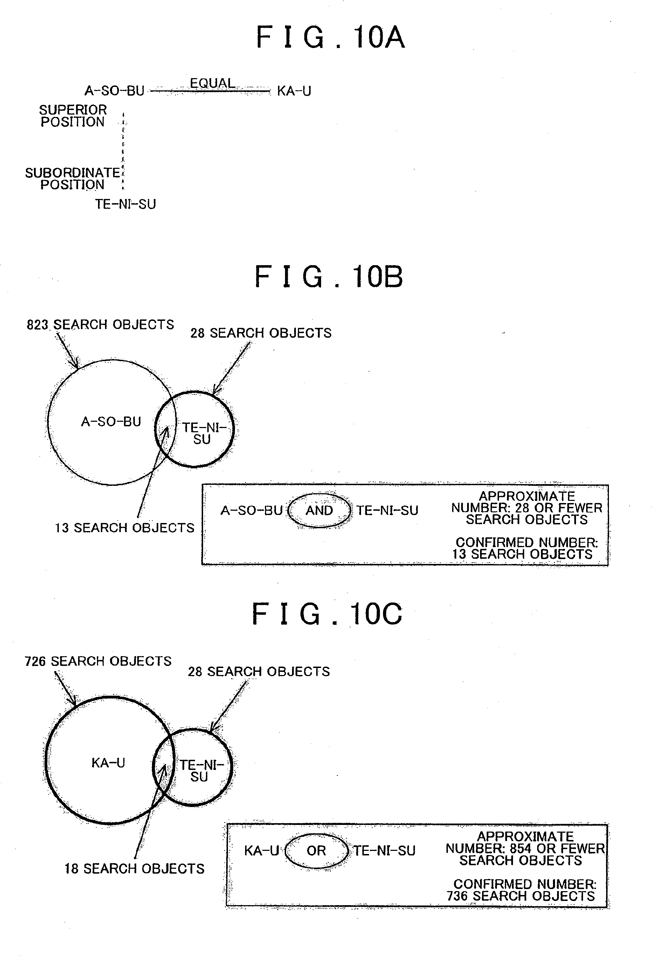

Next, the process by which the navigation device 1 displays the approximate number of the search objects will be explained using the diagrams in FIG. 10.
The explanation will be provided using the Genre category keywords "a-so-bu", "ka-u", and "te-ni-su" as examples.
As shown in FIG. 10A, "a-so-bu" and "ka-u" are ranked equally, with no hierarchical relationship existing between them, while the hierarchical relationship does exist between "a-so-bu" and "te-ni-su", with "a-so-bu" in the superior position and "te-ni-su" in the subordinate position.

As shown in FIG. 10B, in a case where the user designates Genre as the category and inputs "a-so-bu" and "te-ni-su" as the keywords, because the hierarchical relationship exists between "a-so-bu" and "te-ni-su", the navigation device 1 uses logical multiplication to set the search condition to "a-so-bu" × "te-ni-su".
In this example, 823 search objects exist for the keyword "a-so-bu", 28 search objects exist for the keyword "te-ni-su", and 13 search objects exist for the search condition "a-so-bu" × "te-ni-su".

During the time that the search using logical multiplication is being performed, the navigation device 1 displays "28", the number of the search objects for the keyword "te-ni-su", as the approximate number, along with the phrase "or fewer", in the number of search objects area 86 (FIG. 2A). When the search is completed, the navigation device 1 displays "13" as the confirmed number in the number of search objects area 69 (FIG. 3).
In other words, in a case where the keywords are A and B and the search condition is A × B, the maximum value for the number of the search objects that can possibly be found is the smaller value of the number of the search objects for A and the number of the search objects for B. Therefore, the navigation device 1 displays the smaller value as the approximate number, along with the phrase "or fewer".

On the other hand, as shown in FIG. 10C, in a case where the user designates Genre as the category and inputs "ka-u" and "te-ni-su" as the keywords, because the hierarchical relationship does not exist between "ka-u" and "te-ni-su", the navigation device 1 uses logical addition to set the search condition to "ka-u" + "te-ni-su".
In this example, 726 search objects exist for the keyword "ka-u", 28 search objects exist for the keyword "te-ni-su", and 736 (726 + 28 - 18) search objects exist for the search condition "ka-u" + "te-ni-su".

During the time that the search using logical addition is being performed, the navigation device 1 displays "854", the total number of the search objects for the keywords "ka-u" and "te-ni-su", as the approximate number, along with the phrase "or fewer", in the number of search objects area 86 (FIG. 2A). When the search is completed, the navigation device 1 displays "736" as the confirmed number in the number of search objects area 69 (FIG. 3).
In other words, in a case where the keywords are A and B and the search condition is A + B, the maximum value for the number of the search objects that can possibly be found is the sum of the number of the search objects for A and the number of the search objects for B. Therefore, the navigation device 1 displays the sum as the approximate number, along with the phrase "or fewer".

Furthermore, in a case where the search condition formula is A + B, the number of the search objects that can possibly be found is at least the larger value of the number of the search objects for A and the number of the search objects for B. Therefore, the larger value can also be displayed as the approximate number, along with the phrase "or more".
For example, in the case in FIG. 10C, the number of the search objects for "ka-u" is 726, so the approximate number can be displayed as "726 search objects or more, 854 search objects or less" or the like.

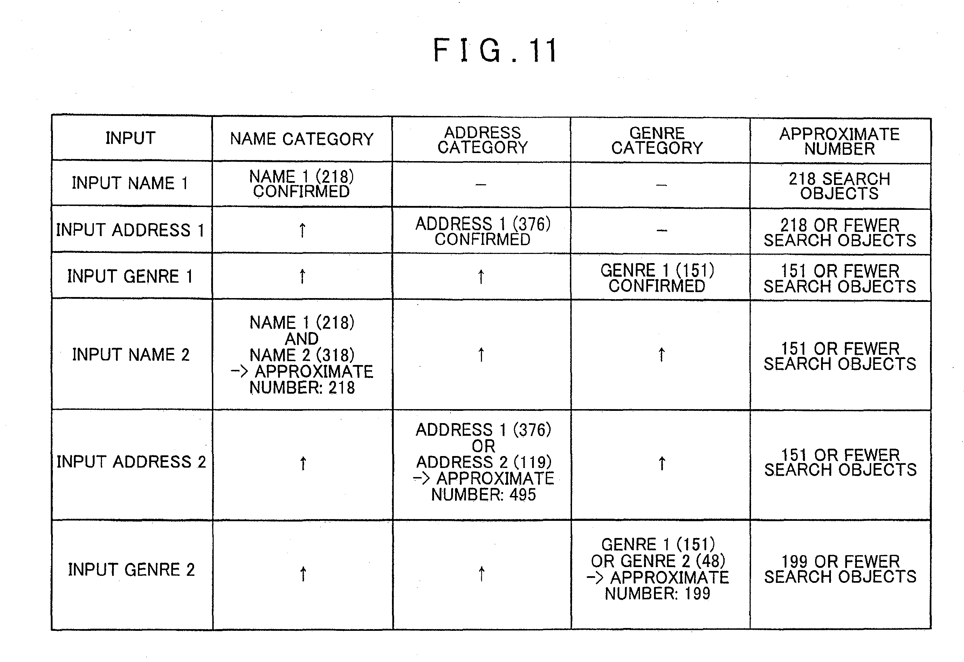

FIG. 11 is a figure that shows, in the form of a table, an example of successive changes of the approximate number as the keywords are input. This is explained below for each item in the Input column in the table.
Input Name 1
In a case where Name 1 is input as the keyword, the navigation device 1 displays the number of the search objects for Name 1 as the approximate number.
In this case, the number of the search objects is 218, so the navigation device 1 displays "218 search objects" as the approximate number.
Note that in the case of a single keyword, the number of the search objects can be confirmed quickly, so in this case, the navigation device 1 displays "218 search objects" without using the phrase "or fewer".

Input Address 1
Next, in a case where Address 1 is input as the keyword, the navigation device 1 looks up the number of the search objects for the newly input keyword Address 1. In this example, the number of the search objects for Address 1 is 376.
Next, because the categories for Name 1 and Address 1 are different, the navigation device 1 sets the search condition to Name 1 × Address 1 and performs the search according to the search condition.
While the search is in progress, the navigation device 1 displays "218 or fewer search objects" as the approximate number. This is because the number of the search objects for Name 1 (218) is less than the number of the search objects for Address 1 (376).
Note that in the table, the symbol "↑" is used in cases where the content of a cell is the same as that of the cell above it.

Input Genre 1
Next, in a case where Genre 1 is input as the keyword, the navigation device 1 looks up the number of the search objects for the newly input keyword Genre 1 in the keyword data file 58. In this example, the number of the search objects for Genre 1 is 151.
Next, because the categories for Name 1, Address 1, and Genre 1 are different, the navigation device 1 sets the search condition to Name 1 × Address 1 × Genre 1 and performs the search according to the search condition.
While the search is in progress, the navigation device 1 displays "151 or fewer search objects" as the approximate number. This is because the number of the search objects for Genre 1 (151) is less than both the number of the search objects for Name 1 (218) and the number of the search objects for Address 1 (376).

Input Name 2
Continuing ahead, Name 2 is input as the keyword. In this case, the navigation device 1 looks up the number of the search objects for the newly input keyword Name 2.
In this example, the number of the search objects for Name 2 is 318.
Next, the navigation device 1 sets the search condition formula for the previously input keyword Name 1 and the subsequently input keyword Name 2, then derives the approximate number for the search condition formula.

Thus, in a case where the keyword that is subsequently added has the same category as the already input keyword, the navigation device 1 first derives the approximate number of the search objects for the keywords with the same category.
This is done in order to make effective use of the search results that have already been found, but a modified example of this will be explained later.

In this example, the keywords are both in the Name category, so the search condition formula is set to Name 1 × Name 2. The number of the search objects for Name 1 is less than that for Name 2, so the approximate number that is displayed for the category is "218", the number for Name 1.
Accordingly, the navigation device 1 sets the approximate number to 218 search objects for Name 1 × Name 2, to 376 search objects for Address 1, and to 151 search objects for Genre 1.
The navigation device 1 then sets the search condition to (Name 1 × Name 2) × Address 1 x Genre 1 and performs the search. Therefore, because the number of the search objects for Genre 1 is the lowest, "151 or fewer search objects" is displayed as the approximate number during the search.

Input Address 2
Further, in a case where Address 2 is input as the keyword, the navigation device 1 first acquires the number of the search objects (119) for Address 2.
Next, the navigation device 1 checks whether or not there is a hierarchical relationship between Address 1 and Address 2 and then selects the logical operator accordingly.
In this case, there is no hierarchical relationship, so the navigation device selects logical addition and sets the search condition to Address 1 + Address 2.

Then the navigation device 1 calculates the approximate number of the search objects for Address 1 + Address 2 as 495 (376 + 119). Note that if the search condition were to use logical multiplication, the approximate number would be 119.
Next, the navigation device 1 sets the search condition to (Name 1 × Name 2) × (Address 1 + Address 2) × Genre 1. At this stage, the approximate number of the search objects for the Name category is 218, the approximate number for the Address category is 495, and the approximate number for the Genre category is 151, so the lowest value is used for the approximate number, and "151 or fewer search objects" is displayed.

Input Genre 2
Next, when Genre 2 is input as the keyword, the navigation device 1 confirms the number of the search objects (48) for Genre 2.
In this case, there is no hierarchical relationship between Genre 1 and Genre 2, so the navigation device 1 sets the search condition to Genre 1 + Genre 2.
Then the navigation device 1 calculates the approximate number of the search objects for Genre 1 + Genre 2 as 199 (151 + 48). Note that if the search condition were to use logical multiplication, the approximate number would be 48.
Next, the navigation device 1 sets the search condition to (Name 1 × Name 2) × (Address 1 + Address 2) × (Genre 1 + Genre 2). At this stage, the approximate number of the search objects for the Name category is 218, the approximate number for the Address category is 495, and the approximate number for the Genre category is 199, so the lowest value is used for the approximate number, and "199 or fewer search objects" is displayed.

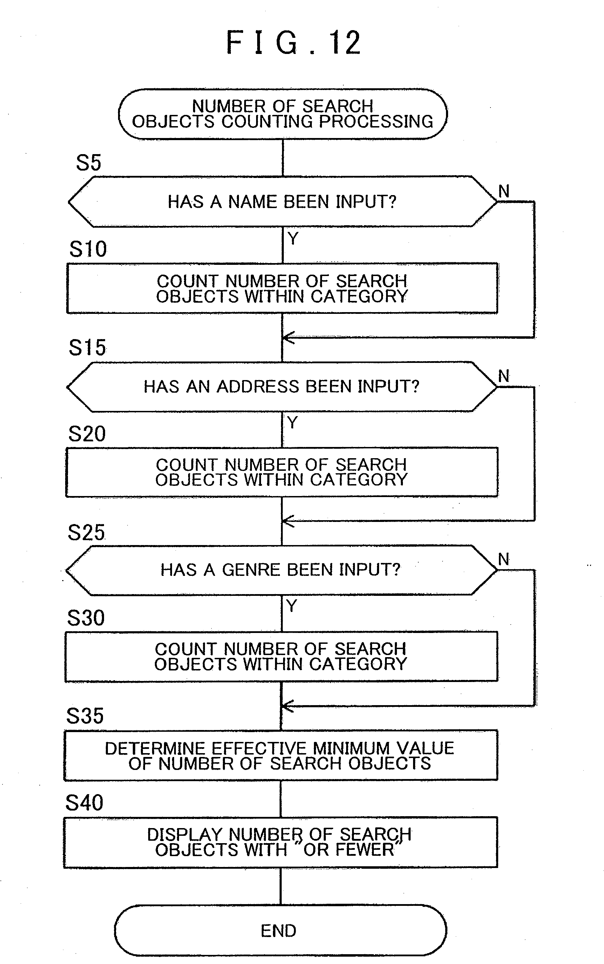

Next, a procedure that displays the approximate number of the search objects will be explained using the flowchart in FIG. 12.
First, when a keyword is input, the navigation device 1 determines the category for the keyword.
In a case where the category for the keyword that was input is Name (Y at S5), the navigation device 1 sets the search condition formula for the name that has already been input and counts the number of the search objects within the Name category (S 10).

In a case where the category for the keyword that was input is not Name (N at S5), the navigation device 1 determines whether the category for the keyword is Address (S15). In a case where the category for the keyword is Address (Y at S 15), the navigation device 1 sets the search condition formula for the address that has already been input and counts the number of the search objects within the Address category (S20).
Note that in the case where the category is Address, the navigation device 1 checks whether or not there is a hierarchical relationship between the address that has already been input and an address that is newly input. In a case where the hierarchical relationship exists, the search condition formula is set to logical multiplication, and in a case where the hierarchical relationship does not exist, the search condition formula is set to logical addition.

In a case where the category for the keyword that was input is not Address (N at S15), the navigation device 1 determines whether the category for the keyword is Genre (S25). In a case where the category for the keyword is Genre (Y at S25), the navigation device 1 sets the search condition formula for the genre that has already been input and counts the number of the search objects within the Genre category (S30).
Note that in the case where the category is Genre, the navigation device 1 checks whether or not there is a hierarchical relationship between the genre that has already been input and a genre that is newly input. In a case where the hierarchical relationship exists, the search condition formula is set to logical multiplication, and in a case where the hierarchical relationship does not exist, the search condition formula is set to logical addition.

In the manner described above, the navigation device 1 counts the number of the search objects within each of the categories, then determines the effective minimum value for the number of the search objects in each of the categories that is used for the approximate number (S35).
The navigation device 1 then displays the selected number of the search objects, along with the phrase "or fewer" (S40).

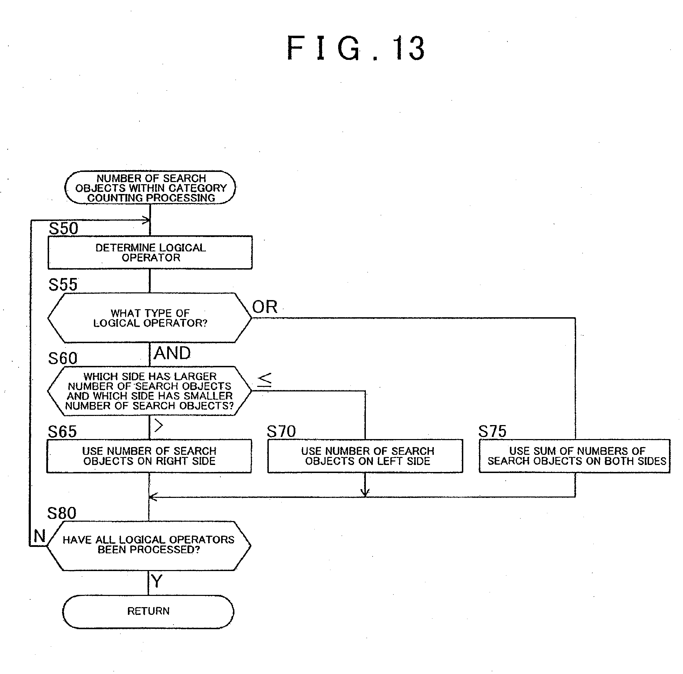

Next, a procedure that performs the counts of the numbers of the search objects within the respective categories at S10, S20, and S30 in FIG. 12 will be explained using the flowchart in FIG. 13.
First, the navigation device 1 determines the logical operator that it will use (S50). In a case where the category is Name, the navigation device 1 uses logical multiplication. In a case where the category is Address, the navigation device 1 uses logical multiplication if a hierarchical relationship exists and uses logical addition if the hierarchical relationship does not exist. In a case where the category is Genre, the navigation device 1 uses logical multiplication if a hierarchical relationship exists and uses logical addition if the hierarchical relationship does not exist.

In a case where the logical operator that is selected by the navigation device 1 is the logical addition operator (OR at S55), the sum of the numbers of the search objects for both of the keywords that are connected by the logical operator is used as the approximate number (S75).
In a case where the logical operator that is selected by the navigation device 1 is the logical multiplication operator (AND at S55), the navigation device 1 checks the numbers of the search objects for both of the keywords to determine which is larger and which is smaller (S60).

In a case where the number of the search objects for the keyword on the left side is greater than the number of the search objects for the keyword on the right side (> at S60), the navigation device 1 uses the number of the search objects for the keyword on the right side as the approximate number (S65).
In a case where the number of the search objects for the keyword on the left side is not greater than the number of the search objects for the keyword on the right side (≤ at S60), the navigation device 1 uses the number of the search objects for the keyword on the left side as the approximate number (S70).
Next, the navigation device 1 checks whether all of the logical operators have been processed (S80). In a case where there are unprocessed logical operators (N at S80), the processing returns to S50 and continues. In a case where all of the logical operators have been processed (Y at S80), the processing ends and returns to the main routine.

According to the present embodiment explained above, the effects described below can be achieved.
(1) When the user designates the category and inputs the keyword, the appropriate logical operator can be set automatically based on the category.
(2) For the keywords that belong to the same category, the appropriate logical operator can be set automatically based on the hierarchical relationship of the keywords.
(3) Because the logical operator is set automatically, the user can input the keywords as he thinks of them, without considering what sort of search condition to set.
(4) The approximate number of the search objects for the keyword that is input can be displayed.
(5) Every time the user inputs a keyword, the approximate number can be displayed in accordance with the new search condition.
(6) The approximate number makes it possible for the user to understand a quantitative range of the search objects for the keyword that the user himself or herself has input. Based on this information, the user can decide whether to add a keyword and whether to delete a keyword.

Modified Example
In the embodiment explained above, the user designates the category, Name, Address, and Genre, in which the keyword is input. However, in a modified example, the navigation device 1 determines the category automatically.
For example, the categories Name and Address are both set for the keyword "to-u-ki-yo-u".
In this case, when the user inputs the keyword "to-u-ki-yo-u", the navigation device 1 recognizes it as the two keywords "to-u-ki-yo-u (Name)" and "to-u-ki-yo-u (Address)".
Note that in this explanation, the category is stated in parentheses after the keyword for identification.

Accordingly, if the Name category is set for the keyword "ra-n-do" and the user inputs the two keywords "to-u-ki-yo-u" and "ra-n-do", the navigation device 1 treats this as a case in which the keyword pair "to-u-ki-yo-u (Name)" and "ra-n-do (Name)" and the keyword pair "to-u-ki-yo-u (Address)" and "ra-n-do (Name)" have both been input. The navigation device 1 therefore performs a search based on the search condition "to-u-ki-you (Name)" × "ra-n-do (Name)" and the search condition "to-u-ki-yo-u (Address)" × "ra-n-do (Name)".

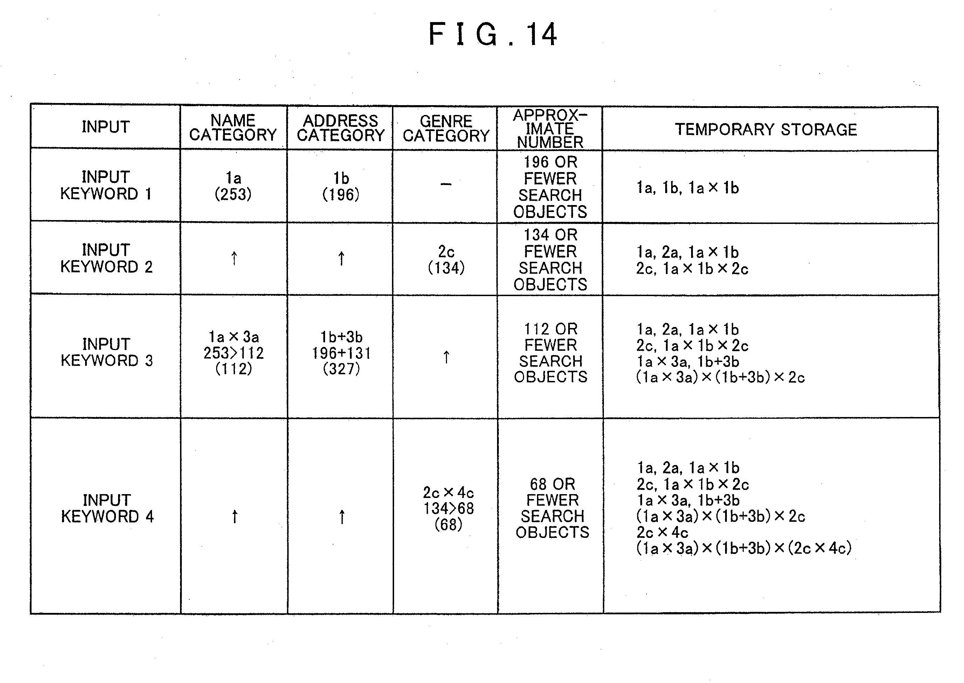

FIG. 14 is a figure for explaining an example of how the navigation device 1 automatically sets the category for the keyword and displays the approximate number of the search objects.
Input Keyword 1
First, the user inputs Keyword 1. The navigation device 1 then searches for Keyword 1 in each of the categories in the keyword data file 58 (FIG. 5) and if Keyword 1 is found, the navigation device sets the corresponding category for Keyword 1.

In this example, Name and Address are the applicable categories for Keyword 1. Keyword 1 in the Name category is called Keyword 1a, and Keyword 1 in the Address category is called Keyword 1b. In FIG. 14, these are respectively abbreviated to 1a and 1b.
Thus in the modified example, when the user inputs Keyword 1 without designating the category, the navigation device 1 searches each of the categories in the keyword data file 58 and sets the category automatically.

The navigation device 1 counts the numbers of the search objects for Keyword 1a and Keyword 1b. There are 253 search objects for Keyword 1a and 196 search objects for Keyword 1b.

Next, the navigation device 1 sets the search condition to Keyword 1a × Keyword 1b, in accordance with the table in FIG. 9, and displays "196 or fewer search objects" as the approximate number, using the number of the search objects for Keyword 1b, because it is less than the number of the search objects for Keyword 1a.
While displaying the approximate number of the search objects, the navigation device 1 performs searches based on Keyword 1a, Keyword 1b, and the search condition Keyword 1a × Keyword 1b. The search results are stored in a storage medium such as the RAM 24 (FIG. 1), the information storage device 50, or the like, as shown in the Temporary Storage column in FIG. 14.
The search results will be used for the search processing in the event that an additional keyword is input later.

Input Keyword 2
Next, the user inputs Keyword 2. The navigation device 1 then searches for Keyword 2 in each of the categories in the keyword data file 58 and sets the category for Keyword 2.
In this example, Keyword 2 belongs to the Genre category, so it is called Keyword 2c.

Once the category is set, the navigation device 1 counts the number of the search objects for Keyword 2c. In this example, the number of the search objects for Keyword 2c is 134.
The navigation device 1 sets the search condition to 1a × 1b × 2c, in accordance with the table in FIG. 9, and displays "134 or fewer search objects" as the approximate number, using the number of the search objects for Keyword 2c, because it is the lowest value among those for Keywords 1a to 2c.
While displaying the approximate number of the search objects, the navigation device 1 performs a search based on Keyword 2c and the search condition 1a × 1b × 2c and stores the search results in the storage medium.

Input Keyword 3
The user also inputs Keyword 3, which is an additional keyword that belongs the same categories as Keyword 1, that is, the Name and Address categories. Keyword 3 in the Name category is called Keyword 3a, and Keyword 3 in the Address category is called Keyword 3b.
Once the categories are set for Keyword 3, the navigation device 1 counts the numbers of the search objects for Keyword 3a and Keyword 3b.
In this example, there are 112 search objects for Keyword 3a and 131 search objects for Keyword 3b.

In a case such as this, where the additional keyword that is input belongs to the same category as a previously input keyword, the navigation device 1 first counts the number of the search objects within the same category.
In the Name category, there are no hierarchical relationships, so the search condition is set to Keyword 1a × Keyword 3a, and the 112 search objects for Keyword 3a is used as the approximate number, because it is less than the number of the search objects for Keyword 1a.
In the Address category, there is no hierarchical relationship between Keyword 1b and Keyword 3b, so the navigation device 1 sets the search condition to Keyword 1b + Keyword 3b, in accordance with the table in FIG. 9, and uses 327 (196 + 131) as the approximate number of the search objects in the Address category

Also in accordance with the table in FIG. 9, the navigation device 1 sets the search condition to (1a × 3a) × (1b + 3b) × 2c. In this case, the lowest of the numbers of the search objects in the Name category (1a × 3a), the Address category (1b + 3b), and the Genre category (2c) is 112, so "112 or fewer search objects" is displayed as the approximate number.

While displaying the approximate number of the search objects, the navigation device 1 performs a search based on the search condition (1a × 3a) × (1b + 3b) × 2c.
More specifically, the navigation device 1 performs a search based on the search condition (1a x 3a), then performs a search based on the search condition (1b + 3b), then performs a search based on the search condition 2c. The navigation device 1 then performs search processing that derives the logical multiplication of the three sets of the search results, but because the search results for the search condition 2c were already stored by the processing for Keyword 2, the stored results are used.
Thus, in a case where the navigation device 1 can utilize the search results that are already stored, using the search results speeds up the search processing.
The navigation device 1 then stores the search results for the searches that were performed based on the search conditions 1a × 3a, 1b + 3b, and (1a × 3a) × (1b + 3b) × 2c.

Input Keyword 4
Next, the user inputs Keyword 4. Keyword 4 belongs to the Genre category, so it is called Keyword 4c.
The navigation device 1 counts the number of the search objects for Keyword 4c, counting 68 search objects.

In this example, there is a hierarchical relationship between Keyword 2c and Keyword 4c, so the navigation device 1 sets the search condition to Keyword 2c × Keyword 4c, in accordance with the table in FIG. 9.
The navigation device 1 then uses 68 as the approximate number of the search objects, because the number of the search objects for Keyword 4c is less than the number of the search objects for Keyword 2c.

Also in accordance with the table in FIG. 9, the navigation device 1 sets the search condition to (1a × 3a) × (1b + 3b) × (2c × 4c). In this case, the lowest of the numbers of the search objects in the Name category (1a × 3a), the Address category (1b + 3b), and the Genre category (2c × 4c) is 68, so "68 or fewer search objects" is displayed as the approximate number.
While displaying the approximate number of the search objects, the navigation device 1 performs a search based on the search condition (2c × 4c) and (1a × 3a) × (1b + 3b) × (2c × 4c).

In this case, the search results for the search conditions (1a × 3a) and (1b + 3b) were already stored by the processing for Keyword 3, so the navigation device 1 uses the stored results to speed up the search processing.
The navigation device 1 then stores the search results for the newly performed searches based on the search conditions (2c × 4c) and (1a × 3a) × (1b + 3b) × (2c × 4c).
The navigation device 1 repeats the same sort of processing until the user selects the End button 85 (FIG. 2A).
This process makes it possible for the user to narrow down the number of the search objects by monitoring the approximate number and inputting the keyword without designating the category.

According to the modified example explained above, the effects described below can be achieved.
(1) The user can input the keyword without designating the category.
(2) When the keyword is input, the navigation device 1 can determine the category for the keyword by searching for the keyword in each of the categories in the keyword data file 58.
(3) The search processing can be sped up by storing intermediate search results and using them for a search that is performed when a new keyword is input.

The configurations described below can also be implemented in the navigation device 1 according to the embodiment and the modified example described above.
A search device can be provided that includes an input unit, a category acquisition unit, a determination unit, and an output unit. The input unit inputs the search term. The category acquisition unit acquires the category for the search term that was input. In a case where a first search term and a second search term are input by the input unit, the determination unit acquires the categories of the first search term and the second search term and determines the logical operator for the first search term and the second search term according to the acquired categories in combination. The output unit outputs the search objects that correspond to the search term for which a logical operation was performed using the logical operator that was determined (a first configuration).
The search device of the first configuration can also be provided in such a way that, in a case where the first search term and the second search term belong to the same category, the determination unit determines the logical operator for the first search term and the second search term according to whether a hierarchical relationship exists between the first search term and the second search term within the category (a second configuration).
The search device of the second configuration can also be provided in such a way that the determination unit determines that the logical operator is logical multiplication in a case where the hierarchical relationship between the first search term and the second search term exists, and determines that the logical operator is logical addition in a case where the hierarchical relationship between the first search term and the second search term does not exist (a third configuration).
The search device of any one of the first, second, and third configurations can also be provided in such a way that the category acquisition unit uses a predetermined association between the search term that was input and the category to acquire the category for the search term (a fourth configuration).
The navigation device can also be provided in such a way that it includes a destination setting unit and a guidance unit. The destination setting unit sets, as a destination, a search object that was found by the search device of any one of the first through the fourth configurations. The guidance unit guides the vehicle to the destination that is set (a fifth configuration).
A search program can also be provided that causes a computer to perform an input function, a category acquisition function, a determination function, and an output function. The input function inputs the search term. The category acquisition function acquires the category for the search term that was input. In a case where a first search term and a second search term are input by the input function, the determination function acquires the categories of the first search term and the second search term and determines the logical operator for the first search term and the second search term according to the acquired categories in combination. The output function outputs the search objects that correspond to the search term for which a logical operation was performed using the logical operator that was determined (a sixth configuration).
In a navigation device, three categories, Name, Address, and Genre, can be designated one at a time by using category tabs. Keywords can be input after the category is designated. Logical multiplication is set as a search condition when the keywords belong to different categories. When the keywords belong to the same category, the search condition is set to logical multiplication if the keywords are in a hierarchical relationship and is set to logical addition if the keywords are not in a hierarchical relationship. Where the search condition is logical multiplication, the maximum number of search results is the number of search objects for the keyword that has the fewest search objects, so that number is displayed. Where the search condition is logical addition, the maximum number of search results is the sum of the numbers of the search objects for each of the keywords, so that number is displayed.

## Claims

1. A search device, comprising:
an input unit (41) that inputs a plurality of search terms that are associated with search objects;
a search condition formula setting unit (21) that sets a search condition for the plurality of the search terms that was input;
an approximate number calculation unit (21) that calculates an approximate number of the search objects that correspond to the set search condition;
an output unit (42, 43, 44) that outputs the search objects that correspond to the set search condition; and
an approximate number display unit (42) that displays the calculated approximate number of the search objects until the search results are output.

2. The search device according to claim 1, wherein
the approximate number calculation unit (21) calculates the approximate number of the search objects based on the number of the search objects that correspond to the search terms that were input.

3. The search device according to claim 2, wherein
the approximate number calculation unit (21) uses as the approximate number of the search objects the maximum number of the search objects that can be found among the search objects that correspond to the search terms that were input.

4. The search device according to claim 3, wherein
the approximate number calculation unit (21), in a case where the search condition for a first search term and a second search term is set to logical multiplication, uses as the approximate number of the search objects the smaller value of the number of the search objects for the first search term and the number of the search objects for the second search term.

5. The search device according to claim 3, wherein
the approximate number calculation unit (21), in a case where the search condition for a first search term and a second search term is set to logical addition, uses as the approximate number of the search objects the sum of the numbers of the search objects for the first search term and the second search term.'

6. The search device according to claim 4, wherein
the approximate number calculation unit (21), in a case where the search condition for a first search term and a second search term is set to logical addition, uses as the approximate number of the search objects the sum of the numbers of the search objects for the first search term and the second search term.

7. A navigation device, comprising:
a destination setting unit that sets, as a destination, a search object that was found by the search device described in any of claims 1 to 6; and
a guidance unit that guides a vehicle to the destination that is set.

8. A search method, comprising the steps of:
inputting a plurality of search terms that are associated with search objects;
setting a search condition for the plurality of the search terms that was input;
calculating an approximate number of the search objects that correspond to the set search condition;
outputting the search objects that correspond to the set search condition; and
displaying the calculated approximate number of the search objects until the search results are output.

9. A computer program product including a program for a processing device, comprising software code portions for performing the steps of claim 8 when the program is run on the processing device.

10. The computer program product according to claim 9, wherein the computer program product comprises a computer-readable medium on which the software code portions are stored, wherein the program is directly loadable into an internal memory of the processing device.
